# EUROPEAN PATENT APPLICATION

(11) **EP 3 733 263 A1**
(43) Date of publication of application: **04.11.2020**
(21) Application number: 20020062.4
(22) Date of filing: 22.12.2015
(51) Int. Cl.: B01D 53/00, B01D 53/04, B01D 53/047, B01D 53/22, B01D 53/64, C01B 32/60, C01D 7/12, C01D 7/18

(54) **PROCESS FOR PRODUCING SODIUM CARBONATE/BICARBONATE**

(30) Priority: 22.12.2014 FR 1463086
(62) Divisional of application: 15820148.3
(71) Applicant: Solvay SA, 1120 Brussels (BE)
(72) Inventor: VANDEVORST, Eric, 7850 Enghien (BE); SAVARY, David Jean Lucien, 69360 Sérezin-du-Rhône (FR); DUPONT, Gérard, 1030 Brussels (BE); WALRAVENS, Hugo, 1853 Strombeek-Bever (BE); DUBOIS, Eric Pierre, 4219 Wasseiges (BE); COQUEREL, Jean-Paul 15, 54950 Saint-Clément (FR); DAVOINE, Perrine, 1020 Brussels (BE); CAVALIER, Karine, 1180 Uccle (BE); HURTADO DOMINGEZ, Ines, 1030 Brussels (BE); ASENSIO, Salvatore, 39300 Torrelavega (ES)
(74) Representative: Vande Gucht, Anne

(57) **Abstract**

Process for producing sodium carbonate with ammonia and/or for producing refined sodium bicarbonate, wherein:
a low CO₂ content gas generated by a unit for producing sodium carbonate with ammonia and/or generated by a unit for producing refined sodium bicarbonate is enriched into a CO₂-enriched gas by using a CO₂ concentration module, such as an amine-type or ammonia or PSA or TSA or cryogenic distillation or membrane-type CO₂ concentration module, and said CO₂-enriched gas has an increased CO₂ content of: +10% (at least) to +90% (at most), by volume on a dry gas basis relative to the CO₂ concentration of the low content gas, and the CO₂-enriched gas is subsequently recycled to the unit for producing sodium carbonate with ammonia and/or to the unit for producing refined sodium bicarbonate, to produce sodium carbonate, or sodium bicarbonate, or to carbonate at least one part of effluent from the unit for producing sodium carbonate and/or from the unit for producing sodium bicarbonate.

## Description

This application claims priority to French application No. 1463086, filed on December 22, 2014, the whole content of this application being incorporated herein by reference for all purposes.

### Technical field

The invention relates to an improved process for producing sodium carbonate with ammonia and/or for producing sodium bicarbonate, such as a process for producing refined bicarbonate. The invention pertains more particularly to a production process featuring reduced emission of carbon dioxide (CO₂), of a process for producing sodium carbonate with ammonia, or of a process for producing refined bicarbonate.

In the present specification, a process for producing sodium carbonate with ammonia, also referred to as the Solvay process, means a process utilizing sodium chloride (NaCl), ammonia (NH₃) and carbon dioxide (CO₂) for the production of sodium bicarbonate (ammoniacal crude sodium bicarbonate) according to the following reactions:

NaCl + H₂O + NH₃ ↔ NaCl + NH₄OH (1)

NaCl + NH₄OH + CO₂ ↔ NaHCO₃(solid) + H₂O + NH₄Cl (2)

The sodium bicarbonate (ammoniacal crude sodium bicarbonate) may be subsequently calcined to give sodium carbonate (light soda ash) according to the following reaction:

2 NaHCO₃(solid) → Na₂CO₃(solid) + H₂O(gas) + CO₂(gas) (3)

In a first variant of the Solvay process, the ammonium chloride (NH₄Cl) is regenerated to gaseous ammonia by reaction with an alkali, generally lime or caustic soda, followed by distillation. For example, with lime, according to the following reaction:

2 NH₄Cl + Ca(OH)₂ → CaCl₂ + 2 NH₃ + 2 H₂O (5)

and the ammonia (gaseous) is recovered, generally by distillation.

The lime is generally produced by calcining limestone with coke, to produce quicklime, according to the following reaction:

CaCO₃ → CaO + CO₂(gas) (6)

and the quicklime is then hydrated in the form of milk of lime to produce calcium hydroxide (Ca(OH)₂).

In a second variant of the process, when the preference is for utilizing the ammonium chloride in the form of a finished product, the ammonium chloride is crystallized in a fourth step (4) by addition of solid sodium chloride and by cooling; in this way, ammonium chloride is precipitated, and can be used, for example, as a fertilizer. This is accompanied by a net consumption of ammonia, according to the molar amount of ammonia extracted from the process which is not regenerated and not recycled. This variant of the Solvay process with ammonia is generally referred to as the dual process or Hou process.

The present invention may be applied to either of the two variants, the basic reactions in which are described above.

In one or the other variant, the production of "refined sodium bicarbonate" (" refined" in contrast to the ammoniacal crude bicarbonate) is carried out in general from solid sodium carbonate dissolved in aqueous solution, and the solid sodium bicarbonate is recrystallized and purified according to the following reaction:

Na₂CO₃(solution) + H₂O(gas) + CO₂(gas) → 2 NaHCO₃(solid) (7)

Refined sodium bicarbonate may also be produced from sodium carbonate obtained by other processes, such as a sodium carbonate monohydrate process or a sodium sesquicarbonate process, these processes generally being supplied with trona or nahcolite minerals.

### Prior art

The Solvay process for producing sodium carbonate (also called soda ash) has undergone numerous developments and optimizations over 150 years, since its creation by Ernest Solvay. These developments have included in particular its energy optimization and the improved management of CO₂.

The process for producing sodium carbonate with ammonia, and/or for producing refined bicarbonate, requires energy: of the order of 9.7 to 13.6 GJ/t of soda ash (sodium carbonate) produced. The energy required is primarily in the form of thermal energy, which is supplied by a steam generator integrated in the process for producing carbonate or bicarbonate. The source of energy most frequently used by the steam generator is a carbon fuel of coal, fuel oil or natural gas type. The boiler of the steam generator produces a flue gas (combustion gas) which contains in general from 3% to 18% of CO₂ by volume on a dry gas basis (generally from 3% to 10% for natural gas boilers and from 8% to 18% for coal or fuel oil boilers).

An example of the process for producing sodium carbonate according to the ammonia process, and of the production of refined bicarbonate, is described in Ullmann's Encyclopedia of Industrial Chemistry ("Sodium carbonate" chapter, 2002 edition, Wiley-VCH Verlag GmbH & Co., 24 pages, in paragraphs 1.4.1 and 1.4.2).

The production of sodium carbonate and/or of sodium bicarbonate, like many industrial processes, emits carbon dioxide:
- by the emission of the steam generator flue gases,
- and by the emission of CO₂-depleted process gases, especially at the outlet of the lime kilns sector in transitory phase, for example during starting or stopping of a lime kiln (70 to 150 kg CO₂/t soda ash), or at the outlet of the CO₂-depleted soda plant column sector (40 to 100 kg CO₂/t soda ash),
- and, for the production of refined bicarbonate, at the outlet of the refined bicarbonate column (50 to 300 kg CO₂/t sodium bicarbonate).

These emissions are for the most part a result of the physicochemical NaCl-NH₃-CO₂ balances of the soda plant columns or of the Na₂CO₃-NaHCO₃-CO₂ balances of the refined bicarbonate columns (cf. Ullmann's Encycl., loc. cit. paragraph 1.4.1).

There are various known techniques for concentrating CO₂.

WO2011/112069 describes a process for capturing CO₂ from flue gases, using a PSA (Pressure Swing Adsorption) adsorption module based on hydrotalcite and zeolite, generating a gas enriched with CO₂ to more than 88% and up to 99.9% by volume on a dry gas basis; the enriched CO₂ is subsequently used in an ammoniacal brine (H₂O, NaCl, NH₄OH) for producing ammoniacal sodium bicarbonate, which is subsequently calcined to give sodium carbonate, and using caustic soda to regenerate ammonia. A disadvantage of this process is that caustic soda is most frequently produced by electrolysis of a sodium chloride (NaCl) brine, thereby co-generating gaseous chlorine (Cl₂), which must be utilized elsewhere.

US2014/0199228 describes a process for producing sodium carbonate by integration of a CO₂ capture module under flue gas pressure, with a process for producing sodium carbonate, in which the CO₂, concentrated to more than 80% and up to 99.95%, is used to produce ammoniacal sodium bicarbonate. A disadvantage of the process is the partial operation under pressure, during the desorption of the enriched CO₂ between 8 and 25 bar, thereby giving rise to problems of corrosion and strength for the steels used.

On the other hand, CO₂ concentration processes have the drawback of being highly energy consuming: for example, a coal boiler steam generator self-consumes up to 30% of the energy produced for the capture of its CO₂.

Over the 150 years of development and improvement of the Solvay process for producing sodium carbonate with ammonia, suppressing CO₂ emissions, or at least greatly reducing these emissions, has always stumbled on the energy cost of concentrating the low-concentration CO₂ resulting from the production processes, that is accompanied by an overall increase in fossil fuels (gas, coal, fuel oil) to be taken into account in the overall balance of CO₂ emitted or emissible from such manufacture.

### Brief description of the invention

The inventors of the present invention have found, surprisingly, that limiting the increase in CO₂ concentration of low-content gases obtained from production of sodium carbonate with ammonia and/or from production of refined bicarbonate, as for example a limited increase in the CO₂ level of +10 to +90%, advantageously of +10 to +80% or of +10 to +70%, without seeking to have a highly concentrated CO₂ gas (to obtain a gas comprising, for example, less than 80% by volume, or less than 70% by volume, of CO₂, on a dry gas basis), irrespective of the CO₂ concentration technique used (amine process, ammonia process, PSA, TSA, cryogenic or membrane process, etc.), and with recycling of these gases to the production of sodium carbonate in order to produce ammoniacal sodium bicarbonate, and/or to the production of sodium bicarbonate, to produce refined bicarbonate, permitted a particularly advantageous synergy. The reason is that this approach makes it possible:
1. to limit greatly the additional energy consumption, especially by using the low-temperature heat energy of the process for enriching low CO₂ content gases,
2. to improve the particle size of the ammoniacal crude bicarbonate and/or of the refined bicarbonate thus produced, by lowering its humidity at the exit from the filter section or from the suction section, and thereby lower the energy consumption for the drying/calcination of the product (to light soda ash) or to dry refined bicarbonate, thereby releasing energy which can be used for the concentration of the CO₂ hitherto emitted to the stack, and allowing it to be recycled/used for the production of sodium carbonate or bicarbonate.

This limited enrichment allows a strong decrease in the overall CO₂ emitted by a soda plant of this kind and/or by a unit for producing refined bicarbonate, and/or in the CO₂ emitted by the power plant and/or the steam boiler supplying utilities to this soda plant.

This limited enrichment exhibits a large number of further advantages.

It makes it possible:
3. to decouple the production of sodium carbonate with ammonia from a refined bicarbonate which would be attached to it, and so to increase the ratio of sodium bicarbonate produced starting from sodium carbonate, by supplying more available CO₂ for the production of sodium bicarbonate than the limited excess generated by the combustible carbon from lime kilns and the CO₂ yields from ammonia soda-plant bicarbonation columns.
4. to increase the flexibility of the units for producing sodium carbonate by partially decoupling the lime kiln sections (producing CaO and CO₂): the CO₂ reused does not require the corresponding calcination of limestone to quicklime.
5. to allow, alternatively, the use of fuel with a lower carbon content than the coke used in the soda-plant lime kilns (composed primarily of carbon and inerts): anthracite fuels or fuels comprising agricultural or forestry residues, which contain more hydrogen and other molecules, give rise to a drop in the CO₂ soda plant level (lime kiln 'lean gas') from 40 vol% to 25-35% (in other words, even leaner).
6. to decouple, alternatively, the operation of the lime kilns for obtaining quicklimes of optimized quality (allowing the production of more reactive quicklimes, or of less viscous milks of lime in order to increase their concentration) without having to operate the kilns for simultaneous production of a lime kiln lean gas with as high as possible a concentration in terms of CO₂ level (40 to 43 vol% on a dry gas basis).
7. to use, alternatively, horizontal lime kilns for the calcination of small limestone (particle size of less than 100, or even less than 50 or 15 mm), for which the CO₂ content of the calcination gases is again lower: 15 to 35%, or 15 to 30% by volume on a dry gas basis.
8. to use, alternatively, an excess of lime (CaO) produced relative to the CO₂, for other production processes.
9. to reduce the consumption of NaCl-type raw materials, by increasing the bicarbonate precipitation yield.
10. to reduce the costs of compressing CO₂/NH₃ with reduced volumes when the CO₂ is enriched.
11. to allow the use of a richer CO₂ (acidic carbon dioxide) for the treatment of the alkaline solid and liquid discharges from the soda plants and/or for production of refined bicarbonate, by reducing the size of the neutralizing apparatus, in order to improve the environmental footprint of the soda plants.

Consequently, the invention relates to a process for producing sodium carbonate with ammonia and/or for producing refined sodium bicarbonate, wherein:
- a low CO₂ content gas generated by a unit for producing sodium carbonate with ammonia and/or generated by a unit for producing refined sodium bicarbonate,
- is enriched into a CO₂ enriched gas using a CO₂ concentration module, such as an amine-type or ammonia or PSA (Pressure Swing Adsorption) or TSA (Temperature Swing Adsorption) or cryogenic distillation-type or membrane-type CO₂ concentration module,
   and said CO₂-enriched gas has an increased CO₂ content of: +10% (at least) to +90% (at most) by volume on a dry gas basis relative to the CO₂ concentration of the low content gas, and
- the CO₂-enriched gas is subsequently recycled to the unit for producing sodium carbonate with ammonia or optionally to the unit for producing refined sodium bicarbonate, in order:
   - to produce at least one product selected from the following: sodium carbonate, or ammoniacal sodium bicarbonate, or refined sodium bicarbonate,
   - or to carbonate at least part of effluent from the unit for producing sodium carbonate with ammonia and/or generated by the unit for producing refined sodium bicarbonate.

### Definitions

In the present specification, the term "a low CO₂ content gas generated by a unit for producing sodium carbonate and/or sodium bicarbonate" denotes a gas with low CO₂ content that is generated by: at least one of the equipments of the unit for producing carbonate or of the unit for producing bicarbonate, including optionally, among the 'at least one equipment': the steam production boiler of the unit for producing sodium carbonate or sodium bicarbonate, and producing a flue gas comprising CO₂.

In the present specification, the term "a CO₂ concentration module of ... type" denotes a module operating "a CO₂ concentration process of ... type ".

In the present specification, the term "amine-type CO₂ concentration process" denotes any process for separating and concentrating carbon dioxide by CO₂ absorption/desorption cycle in a solution comprising an amine.

In the present specification, the term "ammonia-type CO₂ concentration process" denotes any process for separating and concentrating carbon dioxide by CO₂ absorption/desorption cycle in a solution comprising ammonia.

In the present specification, the term "PSA process" denotes any process for gas separation by pressure swing adsorption, employing cyclical variation of the pressure between a high pressure, called the adsorption pressure, and a low pressure, called the regeneration pressure.

In the present specification, the term "TSA process" denotes any process for gas separation by temperature swing adsorption, employing cyclical variation of the temperature between a low temperature, called the adsorption temperature, and a high temperature, called the regeneration temperature.

In the present specification, the term "membrane process" denotes any process for gas separation, or for separating gas dissolved in solution in ionic form, that employs a synthetic membrane. The molecules retained by the membrane constitute the retentate, whereas those which pass through the membrane give rise to a permeate.

In the present specification, the term "cryogenic distillation" denotes any process for gas separation, comprising a stage at temperature below ambient temperature of the unit place, and wherein at least part of CO₂ gas is either liquefied and/ or freezed at solid state, including in that case a freezing-in and freezing-out cycle to provide an enriched CO2 gaz.

In the present specification, the term "recycled ... to produce ...", as in: "the CO₂-enriched gas is subsequently **recycled** into the unit for producing sodium carbonate with ammonia and/or into the unit for producing refined sodium bicarbonate **to produce** at least one product selected from the following: sodium carbonate, or ammoniacal sodium bicarbonate, or refined sodium bicarbonate, or to carbonate at least a part of effluent from the unit for producing sodium carbonate with ammonia and/or generated by the unit for producing refined sodium bicarbonate" : refers to the fact that the CO₂ is recycled for its at least partial absorption (i.e. consumption) in one of the products (sodium carbonate, sodium bicarbonate) or in one of the effluents listed.

In the present specification, the term "soda plant" refers to a unit for producing sodium carbonate by the ammonia process.

In the present specification, ammoniacal crude bicarbonate, also called "crude bicarb", refers to a compound comprising by weight on dry basis: at least 75% of sodium bicarbonate, not more than 25% of sodium carbonate, and at least 0.2% of ammonia (expressed as total NH₄⁺ ion). Crude bicarb after precipitation column, and after separation of mother liquor, has a typical humidity from 8 to 20% water by weight expressed on humid product.

In the present specification, refined bicarbonate refers to a compound comprising at least 97% of sodium bicarbonate, advantageously at least 98% of sodium bicarbonate.

In the present specification, the choice of an element from a group of elements also explicitly describes:
- the choice of two or the choice of several elements from the group,
- the choice of an element from a subgroup of elements consisting of the group of elements from which one or more elements have been removed.

In the present specification, the description of a range of values for a variable, defined by a bottom limit, or a top limit, or by a bottom limit and a top limit, also comprises the embodiments in which the variable is chosen, respectively, within the value range: excluding the bottom limit, or excluding the top limit, or excluding the bottom limit and the top limit.

The term "comprising" includes "consisting essentially of' and also "consisting of".

The use of "one" or "a(n)" in the singular also comprises the plural, and vice versa, unless otherwise indicated.

If the term "about" is used before a quantitative value, this corresponds to a variation of ± 10% of the nominal quantitative value, unless otherwise indicated.

### Brief description of the figure

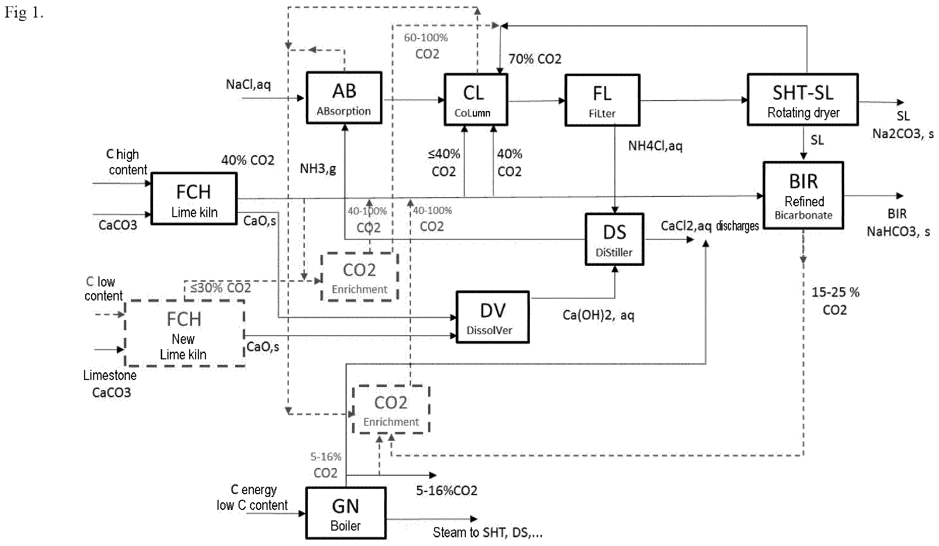

Fig. 1 is a block diagram of various embodiments of the invention, using CO₂ enrichment modules, which are referred to in Example 1.

### Detailed description of the invention

The present invention relates to a number of embodiments of the process, which are detailed below.
Item 1. Process for producing sodium carbonate with ammonia and/or for producing refined sodium bicarbonate, wherein:
- a low CO₂ content gas generated by a unit for producing sodium carbonate with ammonia and/or generated by a unit for producing refined sodium bicarbonate,
- is enriched into a CO₂ enriched gas using a CO₂ concentration module, such as an amine-type or ammonia or PSA (Pressure Swing Adsorption) or TSA (Temperature Swing Adsorption) or cryogenic distillation-type or membrane-type CO₂ concentration module,
   and said CO₂-enriched gas has an increased CO₂ content of: +10% (at least) to +90% (at most) by volume on a dry gas basis relative to the CO₂ concentration of the low content gas, and
- the CO₂-enriched gas is subsequently recycled to the unit for producing sodium carbonate with ammonia or optionally to the unit for producing refined sodium bicarbonate, in order:
   - to produce at least one product selected from the following: sodium carbonate, or ammoniacal sodium bicarbonate, or refined sodium bicarbonate,
   - or to carbonate at least part of effluent from the unit for producing sodium carbonate with ammonia and/or generated by the unit for producing refined sodium bicarbonate.
Item 2. Process according to item 1, wherein the CO₂-enriched gas has an increased CO₂ concentration of not more than: +80%, advantageously of not more than: +70%, more advantageously of not more than +60%, even more advantageously of not more than +55%, even more advantageously of not more than +50% by volume on a dry gas basis, relative to the CO₂ concentration of the low content gas.
Item 3. Process according to item 1 or 2, wherein the CO₂-enriched gas has a CO₂ concentration of not more than 95%, advantageously of not more than 90%, more advantageously of not more than 80%, more advantageously of not more than 70%, or even more advantageously of not more than 65%, or not more than 60%, or not more than 55%, or not more than 50%, or not more than 45%, of CO₂ expressed by volume on a dry gas basis.
Item 4. Process according to items 1 to 3, wherein the CO₂ concentration module is a TSA (Temperature Swing Adsorption)-type CO₂ concentration module, preferably of CTSA (Continuous Temperature Swing Adsorption) type.
Item 5. Process according to items 1 to 3, wherein the CO₂ concentration module is an amine-type CO₂ concentration module.
Item 6. Process according to items 1 to 3, wherein the CO₂ concentration module is an ammonia-type CO₂ concentration module.
Item 7. Process according to items 1 to 3, wherein the CO₂ concentration module is a PSA (Pressure Swing Adsorption) CO₂ concentration module.
Item 8. Process according to items 1 to 3, wherein the CO₂ concentration module is a cryogenic distillation-type CO₂ concentration module.
Item 9. Process according to items 1 to 3, wherein the CO₂ concentration module is a membrane-type CO₂ concentration module.
Item 10. Process according to any one of items 1 to 9, wherein the CO₂-enriched gas has a CO₂ concentration of at least +15%, advantageously of at least +20%, more advantageously of at least +25%, even more advantageously of at least + 30% by volume on a dry gas basis, relative to the CO₂ concentration of the low CO₂ content gas.
Item 11. Process according to any one of items 1 to 3, or to item 6, or to item 10, wherein the CO₂-enriched gas has a concentration of not more than 80%, advantageously of not more than 70% of CO₂, expressed by volume on a dry gas basis.
Item 12. Process according to any one of items 1 to 3, or to item 7, or to item 10, wherein the CO₂-enriched gas has a concentration of not more than 85%, advantageously of not more than 80%, more advantageously of not more than 70%, of CO₂, expressed by volume on a dry gas basis.
Item 13. Process according to any one of items 1 to 12, wherein the CO₂-enriched gas has a concentration of not more than 80% of CO₂, expressed by volume on a dry gas basis.
Item 14. Process according to item 13, wherein the CO₂-enriched gas has a concentration of not more than 70% of CO₂, expressed by volume on a dry gas basis.
Item 15. Process according to any one of items 1 to 14, wherein the low CO₂ content gas is a gas selected from the source gases indicated in Table 1 below (columns 1 and 2 of the table), and the CO₂-enriched gas is an enriched gas according to Table 1 (columns 3 to 5 of the table) and used for the purpose stated in the same columns.

**Table 1: particularly preferred embodiments as per the present invention for enrichment of low CO₂ content gases according to their source (row) and according to the use of the enriched gas (column). The intersection of the rows and columns expresses the enrichment of the low CO₂ content gas, to give a gas enriched with CO₂ and depleted in components other than CO₂ (inerts, nitrogen, oxygen etc).**

| Low CO₂ content gas | | Enriched gas & use | | |
|---|---|---|---|---|
| SOURCES | | GP-GBIR | GR | BIR CR |
| | % CO₂ vol. dry | 40-45% | 70-75% | 90-100% |
| GN,LCL-BIB | 5-16% | +24 to+40 | +54 to +70 | +74 to +95 |
| CL-BIR, FCH horiz. | 15-30% | +15-30 | +45-60 | +65-85 |
| FCH vertical | 30-45% | +10-15 | +25-45 | +45-70 |

Key to abbreviations:
- GN (low CO₂ content gas): flue gas from the steam generator of the unit for producing sodium carbonate with ammonia or from the unit for producing refined bicarbonate.
- LCL-BIB (low CO₂ content gas): exit gas from scrubber (LCL) of precipitation column of crude bicarbonate (BIB or crude bicarb).
- CL-BIR (low CO₂ content gas): exit gas from refined bicarbonate (BIR) precipitation crystallizer or column.
- FCH horiz. (Low CO₂ content gas): exit gas from horizontal lime kiln (FCH) such as rotary lime kilns.
- FCH vertical (low CO₂ content gas): exit gas from vertical lime kilns (FCH).
- GP-GBIR (enriched gas): lean gas (as opposed to the "rich" gas below) (FCH gas) used in the intermediate part of the crude bicarb precipitation columns (cf. Ullmann's Encycl. Fig.7) or BIR gas (for the production of refined bicarbonate).
- GR (enriched gas): rich gas in particular from the ammoniacal crude bicarb dryer gases, and used in the bottom part of the crude bicarb precipitation columns (cf. Ullmann's Encycl. Fig.7).
- BIR CR (enriched gas): gas used for the crystallization of refined bicarbonate (BIR) in a crystallizer (CR) or in a column.
Item 16. Process according to any one of the preceding claims, wherein the CO₂ concentration module consumes energy for the CO₂ concentration of the low CO₂ content gas, and at least part of the energy is steam with a pressure of less than 10, advantageously less than 5, more advantageously less than 3 bar gauge, generated by an apparatus in the unit for producing sodium carbonate with ammonia and/or in the unit for producing refined sodium bicarbonate.
Item 17. Process according to item 16, wherein the steam with a pressure of less than 10 bar gauge is a high-pressure steam expanded after having transferred part of its heat energy to at least one apparatus in the unit for producing sodium carbonate with ammonia and/or in the unit for producing refined sodium bicarbonate, such as: a light soda ash dryer, a dense soda ash dryer, an ammonia distiller, an electricity-generating steam turbine, steam recovery compressor.
Item 18. Process according to item 16 or 17, wherein the steam with a pressure of less than 10 bar gauge is a vapor or steam originating from the mechanical recompression of a steam or via an ejector of a steam or of a vapour from at least one apparatus in the unit for producing sodium carbonate with ammonia and/or in the unit for producing refined sodium bicarbonate, such as: the vapour from a quicklime hydrator, the vapour from a dissolver of quicklime to milk of lime, the vapour from a sodium carbonate monohydrate evaporator-crystallizer, the vapour from a light soda ash dryer, the vapour from a dense soda ash dryer, the vapour of any hot effluent.
Item 19. Process according to any one of the preceding items, wherein the CO₂ concentration module uses energy for the CO₂ concentration of the low CO₂ content gas, and at least part of the energy is a liquid effluent or a condensate having a temperature of at least 35°C and not more than 110°C, generated by at least one apparatus in the unit for producing sodium carbonate with ammonia or in the unit for producing refined sodium bicarbonate.
Item 20. Process according to any one of items 15 to 19, wherein the low CO₂ content gas is a carbon-fuel steam generator flue gas, advantageously having a CO₂ concentration between 5 and 16 vol% on a dry gas basis, and wherein the carbon fuel is selected from the following: a coal, a charcoal, a gas, a lignite, a hydrocarbon, a fuel oil, a biomass, a carbon-containing household waste, a carbon-containing agricultural waste, a water treatment station residue, a carbon-containing industrial residue and mixtures thereof. The steam generator flue gas is advantageously in that case dedusted beforehand, and at least partly purified to remove NOx, and/or SOx, and/or HX.
Item 21. Process according to any one of items 15 to 19, wherein the low CO₂ content gas is from an ammoniacal bicarbonate precipitation column, or from a scrubber of such a column, and advantageously has a CO₂ concentration of between 5 and 16 vol% on a dry gas basis.
Item 22. Process according to any one of items 15 to 19, wherein the low CO₂ content gas is from a refined bicarbonate precipitation column or from a horizontal lime kiln, and advantageously has a CO₂ concentration of between 15 and 30 vol% on a dry gas basis.
Item 23. Process according to any one of items 15 to 19, wherein the low CO₂ content gas is from a lime kiln, advantageously a vertical kiln, advantageously a parallel flow regenerative lime shaft kilns, more advantageously a vertical mixed feed shaft kiln.
Item 24. Process according to preceding item wherein the low CO₂ content gas has a CO₂ concentration of between 15 and 45, or between 20 and 45, or between 30 and 45 vol% on a dry gas basis.
Item 25. Process according to anyone of item 22 to 24, wherein the low CO₂ content gas is from a lime kiln in a tuning phase or in transitory regime, producing a low CO₂ content gas with a CO₂ concentration of at least -5 vol% on a dry gas basis, relative to its nominal operation.
Item 26. Process according to any one of items 22 to 25, wherein the low CO₂ content gas is from a lime kiln operating with a carbon fuel other than coke, such as: an anthracite, or a carbon fuel from industrial or household residues, or from biomass.
Item 27. Process according to any one of items 23 to 26, wherein the low CO₂ content gas is from a lime kiln, and the lime kiln is selected from: a vertical shaft kiln, a vertical straight kiln, a mixed-feed vertical kiln, a vertical kiln with fuel feed through the wall, an alternating-cycle vertical kiln, or an annular vertical kiln.
Item 28. Process according to any one of the preceding items, wherein the concentration of the CO₂-enriched gas is least 30%, advantageously at least 35%, more advantageously at least 40% by volume on a dry gas basis.
Item 29. Process according to item 21 or 22, or 28, wherein the CO₂-enriched gas is recycled into an ammoniacal bicarbonate precipitation column, or refined bicarbonate precipitation column, and is used for the production of: ammoniacal bicarbonate, light soda ash, dense soda ash, or refined bicarbonate, or for the treatment of effluents.
Item 30. Process according to the preceding item, wherein the CO₂-enriched gas is recycled into an ammoniacal bicarbonate precipitation column.
Item 31. Process according to any one of items 23 to 28, wherein the CO₂-enriched gas has a concentration of at least 50%, advantageously at least 60%, more advantageously at least 70%, and preferably not more than 100% by volume on a dry gas basis,
and the CO₂-enriched gas is recycled into an ammoniacal bicarbonate precipitation column, preferably at the bottom part of the ammoniacal bicarbonate precipitation column, or is recycled into a refined bicarbonate precipitation reactor or column, and is used in the production of: ammoniacal bicarbonate, light soda ash, dense soda ash, or refined bicarbonate.
Item 32. Process according to any one of the preceding items, wherein the low CO₂ content gas is generated by a unit for producing sodium carbonate with ammonia, and at least part of the filter liquid after separation of the ammoniacal crude bicarbonate is treated in an electrodialysis cell in which all or part of the NH₄Cl is regenerated to NH₃, such as, in particular, according to the process described in patent application EP 14188350.4.
Item 33. Process for producing bicarbonate according to item 32, wherein the low CO₂ content gas is the exit gas from the refined bicarbonate crystallization reactor or column, and the gas enriched in CO₂ by the CO₂ concentration module comprises at least 40%, advantageously at least 60%, more advantageously at least 70% or even at least 80% of CO₂ by volume on a dry gas basis, and is recycled to the refined bicarbonate crystallization reactor or column so as to increase the overall precipitation yield of CO₂ in the precipitated refined bicarbonate beyond 70%, advantageously at least 80%, more advantageously at least 90%.

The energy consumption of different CO₂ enrichments of low CO₂ content gas was simulated digitally and calculated by the inventors. The table below contains the average energy consumptions of the principal processes for CO₂ concentration that are referred to in the present specification (amines, ammonia, PSA, TSA or CTSA, cryogenic, or membrane):

**Table 2: average energy consumption of CO₂ concentration processes according to CO₂ enrichment (+80%, +30% or +10%). Key to abbreviations:**

| Case (CO₂ concentration of the gases on vol% on dry basis) | Use Example | Energy consumption t Steam/t CO₂ |
|---|---|---|
| GN flue gases or LCL 10% → 90% | BIR CR | 1.30 t Ve / t CO₂ |
| GN flue gases or LCL 10% → 40% | GP-GBIR | 0.65 t Ve / t CO₂ |
| low CO₂ FCH 30% →40% | GP-GBIR | 0.30 t Ve/ t CO₂ |

- GN flue gases (low CO₂ content gas): flue gas from the steam generator of the unit for producing sodium carbonate with ammonia or from the unit for producing refined bicarbonate.
- LCL (low CO₂ content gas): exit gas from column scrubber (LCL) for precipitation of crude bicarbonate (BIB).
- GP-GBIR (enriched gas): lean gas also called 'weak gas' (as opposed to the "rich" gas below) (FCH gas) used in the intermediate part of the crude bicarb precipitation columns (cf. Ullmann's Encycl. Fig.7) or BIR gas (for the production of refined bicarbonate).
- BIR CR (enriched gas): gas used for the crystallization of refined bicarbonate (BIR) in a crystallizer (CR).

Among the various alternatives according to the present invention, that relating to the use of a TSA (and/or CTSA) CO₂ concentration module is particularly preferred when it uses, according to items 16 to 19, the excess low-temperature heat energy from the production of carbonate or from the production of refined bicarbonate, leading thus, by partial and limited concentration of CO₂, to decrease or even cancel additional generation of CO₂ with combustion of fossil energy such as natural gas, coal or petroleum.

Moreover, in all of the cases where enrichment processes referred to in the present specification are used, the partial enrichment in CO₂ of low CO₂ content gases into gases with a CO₂ content of more than 40% concentration - for example at least 45%, or at least 50%, or at least 60%, or at least 70% of CO₂ by volume on a dry gas basis - makes it possible: to increase the particle size of the ammoniacal crude bicarbonate produced, or of the refined bicarbonate, reducing the amount of residual water in the steps of filtering or suctioning the crystallized solids and permitting a net gain in energy, which is in synergy with the use of a CO₂ concentration module, and so makes it possible to limit the overall energy consumption in the production of sodium carbonate by an ammonia process, or the production of a refined bicarbonate with reduced CO₂ discharge.

The examples that follow are intended for illustrating the invention. They should not be interpreted as limiting the scope of the claimed invention.

### Example 1

Figure 1 illustrates various modes of application of the present invention. The diagram elements in solid lines illustrate production of sodium carbonate by the ammonia process or production of refined bicarbonate.

The diagram elements in dashed lines (concentration modules and arrows in dashed lines) illustrate various modes of application of the present invention utilizing a limited-enrichment CO₂ enrichment module, in particular according to item 15.

Key to abbreviations in Fig.1:
- AB: Ammonia absorber (production of ammoniacal brine)
- CL : Bicarbonation column for precipitation of ammoniacal bicarbonate (crude bicarbonate).
- FL: Filter for separating ammoniacal bicarbonate (crude bicarbonate) from the crystallization mother liquors (rich in dissolved NH₄Cl and NaCl), referred to as filter liquid.
- DS: Distiller for the crystallization mother liquors (for regeneration of ammonia), consuming lime and distillation steam and producing a distiller liquid rich in CaCl₂ in aqueous solution.
- DV: Quicklime dissolver for the production of milk of lime, used for the distillation of the filter liquid (crystallization mother liquors of the ammoniacal bicarbonate).
- SHT-SL: Light soda ash dryer (calcination of the ammoniacal bicarbonate to give light soda ash under the effect of heat, consuming steam).
- FCH: Lime kiln
- New lime kiln FCH: FCH operating with less carbon-rich fuel than coke (for example, partially hydrogenated organic material such as charcoal, anthracite, agricultural wastes, etc.).
- GN: Steam generator of the unit for producing sodium carbonate with ammonia or of the unit for producing refined bicarbonate.
- CO₂ enrichment: module for enrichment of low CO₂ content gas (of amine, ammonia, PSA, TSA, membrane or cryogenic type, etc.), preferably of TSA or CTSA type.

### Example 2 (not conforming to the invention)

Production of crude ammoniacal bicarbonate as described in Ullmann's encyclopedia (see above) in section 1.4.1.2 & figure 7 is carried out. The amount of lean gas ('weak gas') injected at 2.5 bar in the middle of the carbonation column is 510 Nm³ of CO₂ at 40 vol% on a dry gas basis, per ton of soda ash produced. The amount of rich gas ('strong gas') injected at 3.5 bar at the bottom of the column is 390 Nm³ of CO₂ at 70 vol% on a dry gas basis, per ton of soda ash produced. The temperature profile along the column (exothermic carbonation reaction) exhibits a temperature maximum of 58°C, and the slurry leaves the carbonation column at 30°C.

The moisture content of the ammoniacal crude bicarbonate produced, at the exit from the rotary filter, is approximately 18%.

### Example 3 (in accordance with the invention)

The same crude ammoniacal bicarbonate production process as described in the preceding example is made up with a lime-kiln lean-gas CO₂ enrichment module operating with a fuel having a lower carbon content. The lime kiln gas produced has a lean gas with 37% by volume of CO₂ on a dry gas basis.

This lean gas is partially enriched by a TSA-type CO₂ concentration module operating over a temperature range between 38°C (adsorption) and 98°C (desorption), to produce a gas enriched to 85% of CO₂ by volume on a dry gas basis, which concentration is measured on a calibrated infra-red Siemens Ultramat 23 analyser. The concentration module uses hot condensates from the distillation section as heating fluid.

The same carbonation column is used as in Example 2, with a quantity of 37% lean gas ('weak gas') readjusted in CO₂ level to 40% with the gas enriched to 85%, and injected at 2.5 bar, in the middle of the carbonation column. The quantity of lean gas injected is unchanged at 510 Nm³ of CO₂ at 40 vol% on a dry gas basis, per ton of soda ash produced. The rich gas ('strong gas') at 70% CO₂ by volume on a dry gas basis is replaced by the rich gas enriched to 85 vol% CO₂ on a dry gas basis, injected at the same pressure of 3.5 bar, injected at the bottom of the column and in a 100% relative CO₂ quantity identical to that corresponding to the flow rate of rich gas in Example 2.

The temperature profile along the column (exothermic carbonation reaction) exhibits a temperature maximum of 61°C, and the slurry leaves the carbonation column at 30°C.

The moisture content of the ammoniacal crude bicarbonate produced at the column outlet is 14% water (average over 24 hours) at the exit of the rotary filter, requiring less steam in the light soda ash dryer (SHT-SL) and compensating the surplus of energy consumed by the CO₂ concentration module.

The utilization yield of NaCl is increased from 73% (Example 2) to 76% (Example 3). The absorption yield (one pass) of CO₂ is equivalent to that in Example 2.

The carbonation column production rate is subsequently increased gradually. An increase of +15% in the column capacity produces the same crude ammoniacal bicarbonate moisture content as in Example 2.

This example shows the advantage of using partial CO₂ enrichment: the overall capture yield of low-content CO₂ (37%) is improved substantially. The capture of CO₂ at the carbonation column exit and its reconcentration to a concentration of 50% to 85% would therefore make it possible to loop this CO₂ and to increase significantly the overall fixation balance of CO₂ produced in the lime kiln section to more than 70%: between 80% to 95%, depending on the possible recovery of the low-temperature heat energy from the unit for producing sodium carbonate.

### Example 4 (in accordance with the invention)

A comparative test similar to Examples 2 and 3 is carried out in a refined bicarbonate production unit similar to that described by Te Pang Hou, Manufacture of Soda, American Chemical Society Monograph Series, Ed. The Chemical Catalog Company, Inc. New York USA, 1933, Chapter XV-The manufacture of Refined Sodium Bicarbonate, pp. 196-197.

A lime kiln gas with 37 vol% of CO₂ on a dry gas basis is used for the carbonation of the refined sodium bicarbonate. A sample is taken at the outlet of the carbonator every hour and is analysed for its particle size, over 24 hours.

In a second phase, the same unit for producing refined sodium bicarbonate is fed with CO₂ gas from a mixture of bicarbonation column exit gas (at 20 vol% CO₂ on a dry basis) and of lime kiln gas (at 37 vol% CO₂ on a dry basis), this mixture being enriched with CO₂ by an amine-type CO₂ concentration module, to a CO₂ concentration of 60 vol% CO₂ on a dry basis. The amine-type concentration module is supplied with energy by the 2 bar steam from the expansion of steam at the outlet of the SHT-SL.

A series of samples are taken from the outlet at the carbonator each hour, in the same way as above, over a duration of 24 hours, and the samples are analysed for particle size.

The change in the weight-average diameter of the sodium bicarbonate crystals produced, and measured by passing them through 500, 400, 355, 315, 250, 200, 160, 125, 100, 63 and 45 µm screens, is significant: +12%. The steam consumption found for the refined sodium bicarbonate dryer is a drop of 7% over the test period, relative to the use of unenriched CO₂.

The average degree of capture of the CO₂ in the crystallized sodium bicarbonate goes from 70% to 88%.

Similar results may be obtained with a CO₂ concentration module of PSA (Pressure Swing Adsorption) type, or cryogenic distillation-type, or membrane-type, wherein advantageously at least part of the energy used by the CO₂ concentration module is steam at less than 10 bar gauge, or a hot condensate, from the unit producing refined sodium bicarbonate, such as steam or condensate exiting the sodium bicarbonate dryer.

Should the disclosure of any patents, patent applications, and publications which are incorporated herein by reference conflict with the description of the present application to the extent that it may render a term unclear, the present description shall take precedence.

## Claims

1. Process for producing sodium carbonate with ammonia and/or for producing refined sodium bicarbonate, wherein:
- a low CO₂ content gas generated by a unit for producing sodium carbonate with ammonia and/or generated by a unit for producing refined sodium bicarbonate,
- is enriched into a CO₂ enriched gas using a CO₂ concentration module, such as an amine-type or ammonia or PSA (Pressure Swing Adsorption) or TSA (Temperature Swing Adsorption) or cryogenic distillation type or membrane-type CO₂ concentration module,
and said CO₂-enriched gas has an increased CO₂ content of: +10% (at least) to +90% (at most) by volume on a dry gas basis relative to the CO₂ concentration of the low content gas, and
- the CO₂-enriched gas is subsequently recycled to the unit for producing sodium carbonate with ammonia or optionally to the unit for producing refined sodium bicarbonate, in order:
• to produce at least one product selected from the following: sodium carbonate, or ammoniacal sodium bicarbonate, or refined sodium bicarbonate,
• or to carbonate at least part of effluent from the unit for producing sodium carbonate with ammonia and/or generated by the unit for producing refined sodium bicarbonate.

2. Process according to Claim 1, wherein the CO₂ concentration module is a TSA (Temperature Swing Adsorption)-type CO₂ concentration module, preferably of CTSA (Continuous Temperature Swing Adsorption)-type.

3. Process according to Claim 1 or 2, wherein the CO₂-enriched gas has an increased CO₂ concentration of at most +80% by volume on a dry gas basis relative to the CO₂ concentration of the low CO₂ content gas.

4. Process according to Claim 3, wherein the CO₂-enriched gas has an increased CO₂ concentration of at most +60% by volume on a dry gas basis relative to the CO₂ concentration of the low CO₂ content gas.

5. Process according to any one of the preceding claims, wherein the CO₂-enriched gas has a CO₂ concentration of not more than 80% of CO₂ expressed by volume on a dry gas basis.

6. Process according to any one of the preceding claims, wherein the CO₂-enriched gas has a CO₂ concentration of not more than 70% of CO₂ expressed by volume on a dry gas basis.

7. Process according to any one of the preceding claims, wherein the CO₂ concentration module uses energy for the CO₂ concentration of the low CO₂ content gas, and at least part of the energy is steam with a pressure of less than 10 bar relative, generated by an apparatus of the unit for producing sodium carbonate with ammonia and/or of the unit for producing refined sodium bicarbonate, and the steam with a pressure of less than 10 bar relative is a high pressure steam which has been expanded after giving up part of its heat energy in at least one apparatus of the unit for producing sodium carbonate with ammonia or of the unit for producing refined sodium bicarbonate, such as: a light soda ash dryer, a dense soda ash dryer, an ammonia distiller, an electricity-generating steam turbine.

8. Process according to any one of the preceding claims, wherein the CO₂ concentration module uses energy for the CO₂ concentration of the low CO₂ content gas, and at least part of the energy is a condensate or a liquid effluent having a temperature of at least 35°C and not more than 110°C, generated by at least one apparatus of the unit for producing sodium carbonate with ammonia or optionally of the unit for producing refined sodium bicarbonate.

9. Process according to any one of the preceding claims, wherein the low CO₂ content gas is a carbon fuel steam generator flue gas.

10. Process according to any one of Claims 1 to 6, wherein the low CO₂ content gas comes from an ammoniacal bicarbonate precipitation column or from a scrubber of such a column.

11. Process according to Claims 9 or 10, wherein the low CO₂ content gas has a CO₂ concentration of between 5 and 16 vol% on a dry gas basis.

12. Process according to any one of Claims 1 to 8, wherein the low CO₂ content gas comes from a refined bicarbonate precipitation column.

13. Process according to Claim 12, wherein the low CO₂ content gas has a CO₂ concentration of between 15 and 30 vol% on a dry gas basis.

14. Process according to any one of Claims 1 to 8, wherein the low CO₂ content gas comes from a lime kiln.

15. Process according to Claim 14, wherein the low CO₂ content gas has a CO₂ concentration of between 20 and 45 vol% on a dry gas basis, or between 25 and 35 vol% on a dry gas basis.

16. Process according to any one of the preceding Claims, wherein the CO₂-enriched gas is subsequently used in a unit for producing refined sodium bicarbonate.
